# EUROPEAN PATENT APPLICATION

(11) **EP 2 450 231 A1**
(43) Date of publication of application: **09.05.2012**
(21) Application number: 11187381.6
(22) Date of filing: 01.11.2011
(51) Int. Cl.: B60N 3/00, B60R 7/10

(54) **Seat tray**

(30) Priority: 04.11.2010 GB 201018576
(71) Applicant: Nissan Motor Manufacturing (UK) Ltd., Cranfield Bedfordshire MK43 0DB (GB)
(72) Inventor: Parker, Chris, Cranfield, Bedfordshire MK430DB (GB); Prior, Phillip, Cranfield, Bedfordshire MK430DB (GB); Thompson, Peter, Cranfield, Bedfordshire MK430DB (GB); Royds, Tom, Cranfield, Bedfordshire MK430DB (GB)

(57) **Abstract**

A seat tray apparatus 10 comprises a table portion 10b rotatable relative to seatback 11 via hinges 10a, from a stowed position (Fig. 1a) to a deployed position (Fig. 1b). Table portion 10b has a free edge comprising a coat hanger portion 10c. Table 10b is substantially rectangular with at least one tapered coat hanger "shoulder" 10s, and may have a "neck" portion 14. Apparatus 10 may move between a first, stowed position (Fig. 4a); and a second, offset position (Fig. 4b) where it is spaced from seatback 11 and substantially parallel thereto. Latching means (201j, 201k, Fig. 4a; 501ct; 540ct, Fig. 5a) may hold the tray upright. A second table portion (110b2, Fig. 3a) may slide within a cavity (110bi, Fig. 3a) in first portion 110b, and may be locked in place and retained by pins (120b, Fig. 3b), releasable by a handle (114H, Fig. 3a).

## Description

### Field of the invention.

The present invention is concerned with a seat tray rotatably supported on a seat back of a seat; such as a seat in a passenger or commercial vehicle. Aspects of the invention relate to a seat tray apparatus, to a seat and to a vehicle.

### Background of the invention.

As seats in vehicles typically occupy a considerable proportion of the available volume of a passenger compartment within the vehicle, it is common for vehicle and vehicle seat manufacturers to provide the seats with various convenience features aimed at improving comfort and space utilisation. One such feature is a tray or table feature, mounted onto a seatback and arranged for use by a passenger seated in a more rearward seating position. Such seat trays have been common in passenger aircraft and in trains, and are becoming more popular in passenger cars, especially cars such as multi-purpose vehicles (MPVs), mini-vans and sports-utility vehicles (SUVs).

The seat tray typically comprises a rectangular shaped tray, secured to the seatback via at least one hinge and arranged to allow the tray to be moved, for example rotated, from a stowed position, where the tray is folded substantially flush against the seatback, to a use (or deployed) position, in which the tray is oriented substantially horizontally and generally perpendicular to the seatback. In some cases, the movement of the seat tray is limited so as to resist over rotation. In this way, the weight of items placed on the tray when in the deployed position, does not cause the tray to rotate further downward; which may cause the items to fall from the tray in use.

Another popular feature fitted to vehicles and particularly to vehicle interiors, is a coat-hook. Once a passenger boards a vehicle, they may find travelling whilst wearing a coat or jacket uncomfortable. The garment may also become creased if the wearer is forced to sit on it whilst travelling. To address this, the passenger may remove their coat or jacket and hang it on a coat-hook feature located within the vehicle interior during the journey. This allows for greater freedom of movement for the passenger whilst travelling, and reduces the likelihood that the garment may become creased. Such coat-hooks are typically fitted to, or integrated with, a roof-mounted or pillar-mounted grab-handle arranged to help the user to enter and leave the vehicle. However, a known problem with using a coat-hook to hang and transport a garment such as a suit jacket is that it offers no form to hold the shape of the garment. Unlike, for example, a coat-hanger, using a coat-hook can lead to the garment becoming creased or misshapen with repeated use.

It is against this background that the present invention has been conceived. It is an aim of the present invention to address the issue of improved use of interior space, whilst minimising the risk of garments becoming creased or damaged during a journey. In addition, the present invention offers a reduction in parts complexity compared to known systems. Aspects and embodiments of the invention may provide a seat tray apparatus for a seat, a vehicle seat and a vehicle comprising said apparatus. Other embodiments of the invention may provide a means for selectively adjusting the shape and orientation of the seat tray for use in a variety of modes. This approach greatly improves the packaging and utility of the seat tray apparatus. Other aims and advantages of the invention will become apparent from the following description, claims and drawings.

### Summary of the invention.

Aspects of the invention therefore provide a seat tray apparatus, a seat and a vehicle as claimed in the appended claims.

According to a first aspect of the present invention, there is provided a seat tray apparatus for mounting to a seatback of a seat, the apparatus comprising a table portion arranged to be rotatable relative to the seatback; wherein said table portion has at least one free edge; and a free edge of said table portion comprises a coat hanger portion; **characterized in that**: the table portion is substantially rectangular and the coat hanger portion comprises a tapered portion extending from said table portion.

Advantageously, the present invention integrates the functionality of a hinged seatback mounted tray and of a coat hanger, optimising use of space and adding functionality to a seat.

In an example, the table portion is arranged to be hinged to the seatback along a first edge of said table portion; and the coat hanger portion is arranged along a free edge of said table portion which is opposed to said first edge.

In an example, the table portion comprises at least one hinge at a proximal end of said table portion to said seatback, and the coat hanger portion comprises a substantially linear neck portion at a distal end of the table portion from said seatback, and two opposite handed tapered shoulder portions adjacent to said neck portion .

Advantageously, the present invention integrates the form of a coat hanger into a seatback mounted tray or table, greatly improving the ability to support a garment such as a coat or jacket on the seatback without creasing or misshaping of the garment in use.

In an example, the coat hanger portion is integral with the free edge of said table portion. Alternatively, the coat hanger portion is assembled to the free edge of said table portion. In a further alternative, the coat hanger portion extends from the free edge of said table portion.

In an example, the table portion is substantially rectangular and the coat hanger portion tapers from a width substantially that of the table portion to that of a free edge and the width of said free edge is less than half that of the width of the table portion.

In an example, said tray apparatus is fixed to the seatback by a hinged mounting means.

In an example, the table portion is arranged to move between a first, tray-stowed position and a second, tray-deployed position, and in the tray-stowed position, the coat hanger portion is held away from, but substantially parallel to, said seatback to which the seat tray apparatus is mounted.

Advantageously, this arrangement facilitates the use of the seatback mounted tray as a means to safely and conveniently support a garment when the tray is in the stowed position, without risk of the garment becoming creased between the seatback and the tray. In this way, if the table portion is not required to act as a table or desk, it may still function as a means to support a garment, stowing the garment out of the way of the occupant of the seat. This maximises the utility from the materials required to provide the seat tray assembly.

In an example, the hinged mounting means is configured to permit the table portion to rotate about a first axis to facilitate use in a tray-deployed condition, and to rotate about a second axis from a tray-stowed condition to permit movement of the table portion and coat hanger away from said seatback into an offset position, facilitating the accommodation of at least a portion of a garment between the seatback and the coat hanger portion in use.

In an example, the table portion is arranged to rotate about a first pivot between the stowed and deployed positions, and further comprises means to permit movement of the table portion and coat hanger portion away from said seatback into an offset position, so as to increase a spacing therebetween.

Advantageously, this arrangement provides optimal movement of the table portion from a tray-stowed to a tray-deployed position when the user chooses to use the table-portion as a desk or shelf, whilst not detracting from the functionality of the assembly when used to support a garment when in the tray-stowed position. It is particularly convenient for support of thicker garments such as winter coats.

In an example, the seat tray apparatus further comprises latching means arranged to cooperate with and/or support at least a part of the coat hanger portion when the tray is in the tray-stowed position or in the offset position. Said latching means may connect an upper part of at least one edge of the coat hanger portion which is uppermost in a stowed position or an offset position, with an adjacent part of the seatback.

Advantageously, the latching means serves to at least partly support the weight of a garment hung on the hanger portion when it is in the tray-stowed or offset position, preventing unintentional movement of the table portion; which may otherwise result in the garment falling from the hanger portion in use.

In an example, the coat hanger portion is arranged to move relative to the table portion between a hanger-withdrawn position, where the exterior dimensions of the apparatus are kept to a minimum, and a hanger-extended position, where the exterior dimensions of the apparatus are increased so as extend the distance between the hanger portion and a floor-plane on which said seat stands.

In an example, latching means is provided between the table portion and the coat hanger portion, to selectively limit relative movement therebetween.

Advantageously, permitting the hanger portion to move relative to both the seatback and the table portion permits use of the tray as a desk or table even in cramped conditions where required, yet still provides the capability to hang even quite long garments from the seatback where space and seat occupancy permits.

In an example, the table portion comprises a first table portion arranged to be hinged to the seatback, and further comprises a second table portion comprising a coat hanger portion arranged to move relative to the first table portion between a hanger-withdrawn position and a hanger-extended position. In the hanger-withdrawn position, the second table portion may be disposed at least partially within a recess or cavity in the first table portion. Latching means may be provided between the first table portion and the second table portion for selectively limiting relative movement therebetween.

According to another aspect of the present invention for which protection is sought, there is provided a seat comprising a seat tray apparatus according to any preceding paragraph.

According to a further aspect of the present invention for which protection is sought, there is provided a vehicle comprising a seat tray apparatus or seat according to any preceding paragraph.

Within the scope of this application it is envisaged that the various aspects, embodiments, examples, features and alternatives set out in the preceding paragraphs, in the claims and/or in the following description and drawings may be taken independently or in any combination thereof. In particular, features described in connection with one embodiment are applicable to the other embodiment, except where there is an incompatibility of features.

### Brief Description of the Drawings

The present invention will now be described, by way of example only, with reference to the accompanying drawings in which:
Figures 1a through 1c show views of a known vehicle seating arrangement comprising a seatback mounted tray;
Figure 1d shows a known coat hook feature integrated into a trim element of a vehicle interior;
Figure 2 shows a schematic view of an example of a seat tray apparatus according to an aspect of the present invention;
Figures 3a and 3b show views of another example of a seat tray apparatus according to an aspect of the present invention, where Figure 3a shows the hanger portion in a withdrawn or stowed position and Figure 3b shows the hanger portion in an extended position;
Figures 4a and 4b show views of another example of a seat tray apparatus according to an aspect of the present invention, where Figure 4a shows a "double hinged" seat tray apparatus in a stowed position; and Figure 4b shows part of the apparatus of Figure 4a in an offset position; and
Figures 5a and 5b show plan and partial end elevation views respectively of a laterally linked seat tray latch assembly. Figure 5b shows a view along arrow B in Figure 5a.

While the examples given for suitable applications for the present invention relate to seat trays for passenger cars, it will be appreciated by one skilled in the art that there are potentially other uses for the present invention with other types of passenger vehicles such as aircraft and trains. Similarly, the present invention may be readily adapted for use with non-vehicular based seating such as may be found in a cinema or theatre.

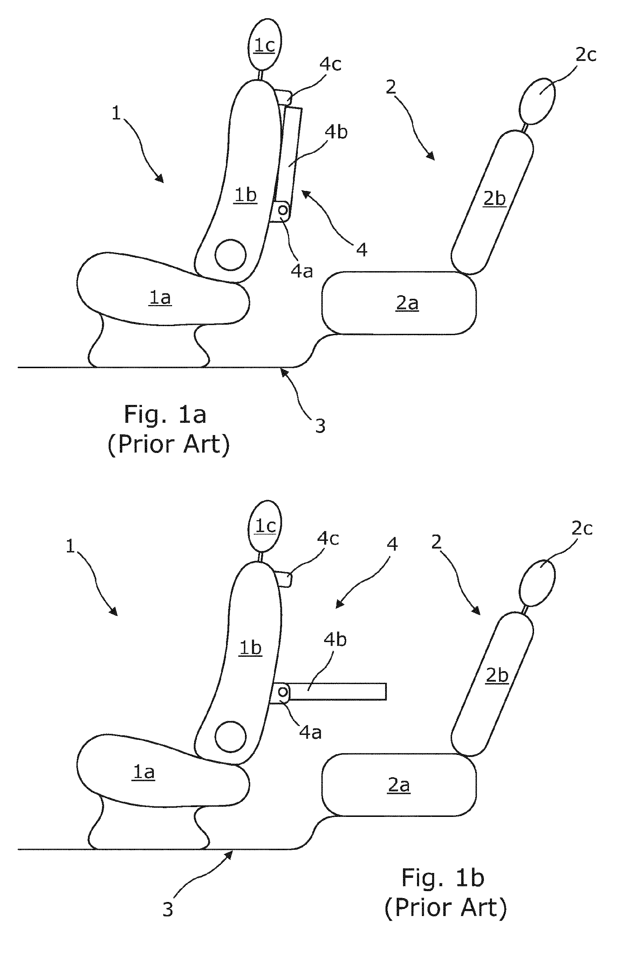

Figure 1a shows an example of a known vehicle seating arrangement comprising seats arranged in rows. In the Figures only one seat per row is shown for clarity. In the seating arrangement shown there is provided a front seat 1 and a rear seat 2. It will be appreciated that there may be multiple seats arranged in successive rows from the front of a vehicle occupant compartment to the back.

In the known vehicle seating arrangement shown in the Figure, the front seat 1 comprises a seat base 1a, a seatback 1b and a head restraint 1c. The seat base 1a is secured to a suitably rigid vehicle structure such as the floor, shown generally at 3. The rear seat 2 comprises a seat base 2a, a seatback 2b and a head restraint 2c. As with the front seat 1, the rear seat 2 is secured, at least in part, to the vehicle floor 3.

Figure 1a shows the seatback 1b of the front seat 1 provided with a folding table assembly 4 comprising: hinged mounting means 4a; a table portion 4b; and a latch 4c. The known folding table assembly 4 is shown folded up into a stowed position in Figure 1a and folded down to a deployed position in Figure 1b. The folding table assembly 4 is intended for use by the occupant of the rear seat 2 and is arranged to be stowed against the front seatback 1b when not in use. When in the stowed position, the table portion 4b is provided with a latching feature (not shown) arranged to cooperate with the latch 4c in use, securing the table portion 4b against the seatback 1b. This arrangement facilitates ingress and egress for passengers of the rear seat 2: by folding the table assembly 4 substantially flush against the seatback 1b, there is little intrusion into the rear seating area; and the table does not block access to and from the rear door (not shown).

It may be seen from Figures 1a and 1b that the table portion 4b may be rotated through an angle of approximately 90° between the stowed and deployed positions. In the deployed position, the table portion 4b is arranged to present a substantially horizontal surface to the rear seat occupant who may use the table portion 4b as a writing desk, or to support a personal electronic device such as a laptop computer, DVD player or the like.

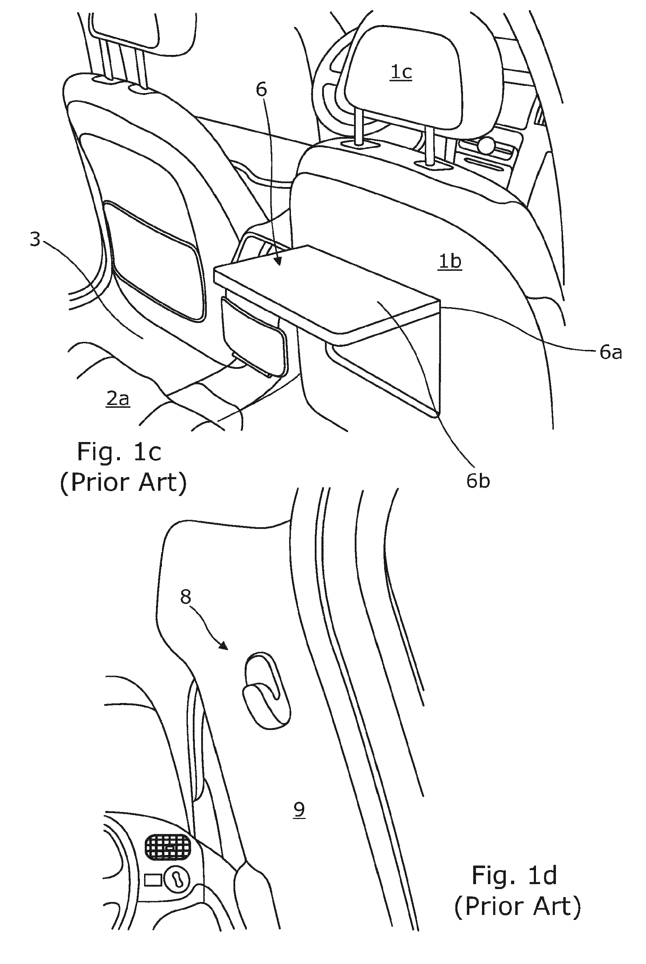

Figure 1c shows another example of a known front seat 1 and folding table assembly 6. These differ from the assembly 4 of Figure 1a and Figure 1b in that a hinged mounting means 6a is arranged to permit a table portion 6b to fold upwardly into the use or deployed position, rather than downwardly as in the embodiment of Figure 1b. This arrangement is particularly useful where there is limited room for the knees of the seated occupant and so the gap between the front and rear seat must be maximised in order to facilitate ingress and egress for adult passengers.

It will be appreciated that the known folding table assemblies shown in Figure 1 are useful only to the occupant of the rear seat; and provide no benefit to the occupant of the seat to which the folding table assembly is mounted. Consequently, since the majority of journeys travelled in passenger cars are taken with front seat occupants only, the known folding table assembly is unlikely to be used frequently.

Figure 1d shows an example of another known convenience feature fitted to the interior of a vehicle, a coat hook 8. In the example shown, the coat hook 8 is integrated into a roof pillar trim 9 located in a position and at a height convenient for the user to hang a garment such as a coat or jacket whilst they are travelling in the vehicle. This may be desirable for improved comfort for the vehicle passengers; and may serve to limit creasing of the garments in question.

A known problem with using a coat-hook to hang and transport a garment such as a suit jacket is that it offers no form to hold the shape of the garment. Unlike a coat-hanger for example, using a coat-hook can lead to the garment becoming creased or misshapen with repeated use. In addition, the use of a coat hook necessitates that the garment be provided with an appropriate hanging loop. Using a coat hook to transport a garment such as a suit jacket without a hanging loop may lead to the hook leaving a witness mark in the material of the garment as the hook tends to locally stretch the material in contact with the hook in use. Clearly this is not desirable, especially where the appearance of the garment after transportation is important.

The present invention seeks to address these issues, whilst at the same time providing the user with a convenient and intuitive feature which is less likely to cause creasing or misshaping of a garment being transported.

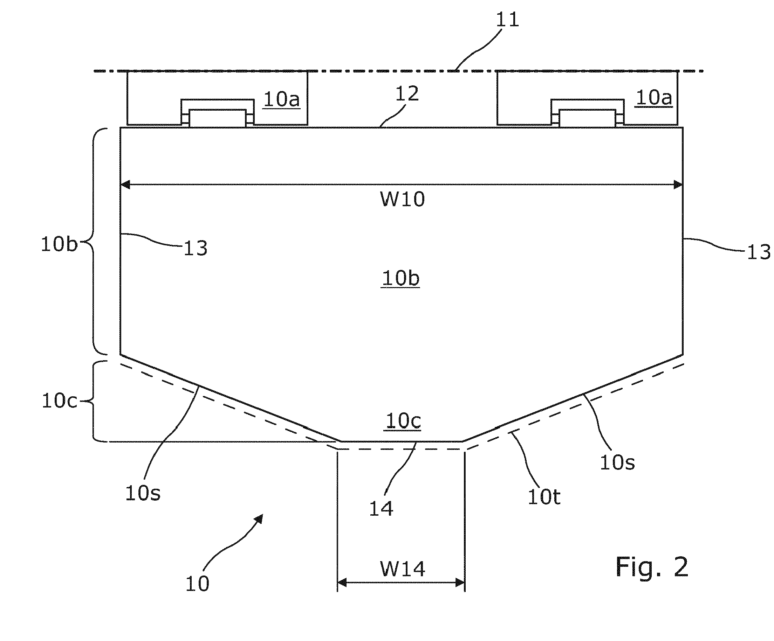

Figure 2 shows a schematic plan view of an example of a seat tray apparatus 10 of the present invention. The seat tray apparatus 10 is shown mounted to a seatback of a seat represented by the dashed line 11. The apparatus 10 comprises a table portion 10b that is pivotably mounted to the seatback at a first edge 12 thereof by means of hinges 10a. The free edge 14 of the table portion 10b, distal from the hinged edge 12, is arranged to be grasped by the user to rotate the table portion 10b downwardly between a stowed and a deployed position in use.

Unlike the substantially rectangular tables 4b, 6b of the known seat trays shown in Figure 1, the free edge 14 of the table portion 10b is configured to define a coat hanger portion 10c comprising two tapering shoulder portions 10s. The tapered profile 10t of the free edge 14 is arranged to provide a support surface equivalent to that of a conventional coat hanger, being configured to replicate the neck and shoulders of a human around which a garment may be hung in use. It may be seen that, due to the tapering of the shoulder portions 10s, the width W14 of the free edge 14 is less than half of the width W10 of the table portion 10b. Numerals 13 denote left and right edges of the tray 10. These are also considered to be free edges, as they are not directly connected to seatback 11.

It will be appreciated that the hinges 10a are configured to permit movement of the table portion 10b between a tray-stowed position, in which the table portion is oriented upwardly and substantially parallel to the seatback, and a tray-deployed position in which the table portion is rotated downwardly to extend substantially horizontally and generally perpendicular to the seatback. In the tray-stowed position, the coat hanger portion can be used to support a jacket or other garment; and depending on the shape of the seatback, may be held away from said seatback to which the seat tray apparatus is mounted, due to the offset of hinges 10a from the seatback 11.

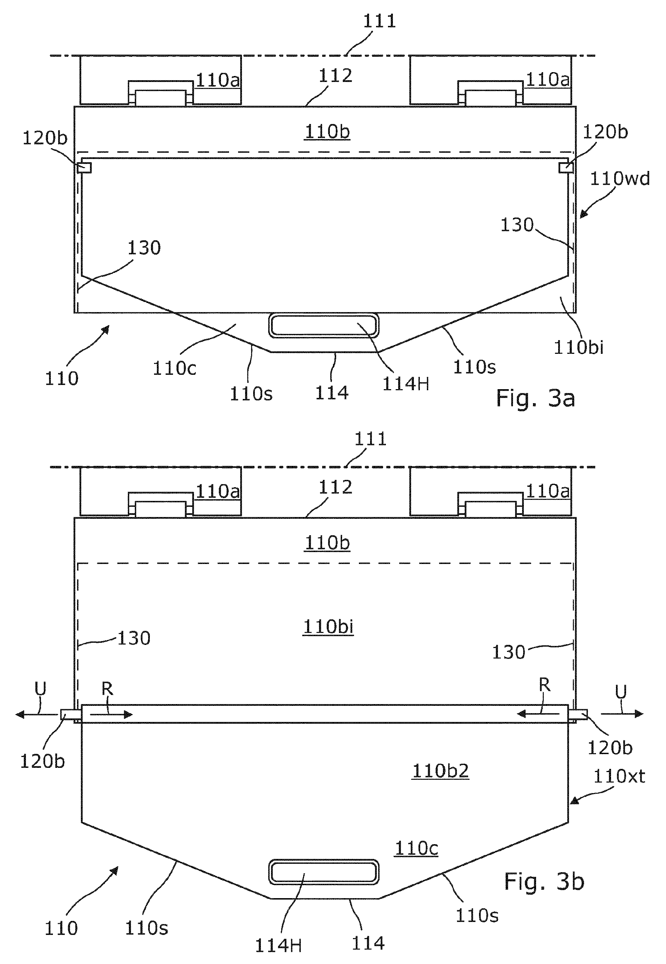

Figures 3a and 3b show an alternative example of a seat tray apparatus 110 according to an aspect of the present invention. In this example, the apparatus 110 comprises a first table portion 110b and a second slide-out table portion 110b2 comprising a coat hanger portion 110c. Part 110b2 is supported on guides 130 within a pocket or cavity 110bi inside table portion 110b. Figure 3a shows portion 110b2 and coat hanger portion 110c withdrawn (position 110wd) within cavity 110bi for use of apparatus 110 as a desk; while Figure 3b shows coat hanger portion 110c extended (position 110xt) to provide more working space when the tray is horizontal; or to support a garment when the tray is substantially upright. It will be understood that the apparatus is intended for supporting a garment when in the stowed position in which the table portions 110b, 110b2 and the coat hanger portion 110c are oriented upwardly, substantially parallel to the seatback. By providing an extensible coat hanger portion 110c, the shoulder portions 110s over which the user may hang a garment are moved further away from the vehicle floor, accommodating longer garments without their touching the floor.

It may be seen from the Figures that the coat hanger portion 110c is provided with a handle portion 114H adjacent the free edge 114 by which the user is able to grip and move the coat hanger portion 110c relative to the table portion 110b. Surrounding the edge of the handle 114H is a control handle (not shown), arranged to actuate a latch mechanism (also not shown) contained within the second table portion 110b2. The latch mechanism comprises a pair of opposed biased latch pins 120b. The latch mechanism has a biasing means to urge the latch pins 120b in the outward directions U indicated by arrows in Figure 3b. The control handle is arranged to apply operating forces via suitable cables and/or levers (not shown) to retract the latch pins 120b in the directions indicated by arrows R when relative movement between the coat hanger portion 110c and the table portion 110b is desired. The latch pins 120b are arranged to engage recesses (not shown) in the guides 130 lining the interior of the pocket or cavity 110bi. The latch pins 120b are arranged to retain the second table portion 110b2 within the table portion 110b so as to resist the complete removal of the second table portion therefrom. Latch pins 120b are shown in their retracted positions in Figure 3a. One or more further locking positions for pins 120b may be provided between positions 110xt and 110wd of second table portion 110b2.

This alternative example, shown in Figures 3a and 3b, not only accommodates the support of longer garments; but allows the user to use the coat hanger portion 110c as an extension of the table portion 110b. This reduces the reach distance from their seated position when using the apparatus 110 as a desk or work surface, and allows more working room on table 110b, 110b2. The provision of an extensible second table portion 110b2 comprising a coat hanger portion 110c, arranged to move relative to table portion 110b, provides the benefit that the exterior dimensions of the apparatus 110 are minimized when the hanger portion 110c is stowed. Similarly, when the tray is substantially upright adjacent to seatback 111 and hanger portion 110c is extended, the exterior dimensions of the apparatus are increased, extending the distance between the hanger portion 110c and a floor-plane (3, Figs. 1a and 1b) on which the seat stands.

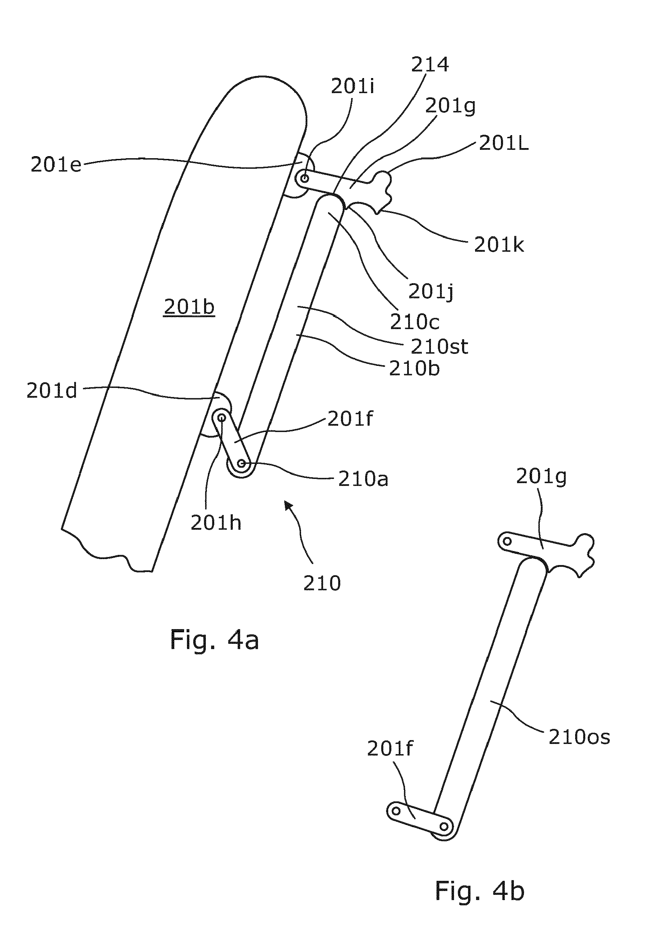

Figure 4a shows a side view of a "double hinged" seat tray mounting, in a detail side view corresponding to Figure 1a. The seat tray is generally indicated as 210; the table portion being indicated as 210b, and the coat hanger portion as 210c. Seat back 201b provides a lower mounting point 201d for lower arm 201f, and an upper mounting point 201e for upper arm 201g, said arms being mounted on pivots 201h and 201i respectively. Lower arm 201f acts as a double pivot arm. It rotates about pivot 201h, and allows tray 210 (shown in stowed position 210st) to rotate about pivot 210a. Arm 201f can rest in a downwards sloping position as shown in Figure 4a, or in a substantially horizontal position as shown in Figure 4b. Upper arm 201g has a single pivot 201i, and two latching projections 201j and 201k on its lower side. A grip 201L is moulded into the upper side of arm 201g.

Arm 201f is biased by the weight of tray 210 towards the downwards sloping position shown in Figure 4a. In this position, tray 210 is held close to the seat back in its stowed position 210st; and thinner, typically summer weight, clothes may be hung on the hanger 210c. Latching part 201j holds tray 210 in this position. To move tray 210 out to the offset position 210os as illustrated in Figure 4b, the user pushes grip 201L forwards and upwards to push arm 201g upwards, releasing tray 210 from latching part 201j. The user then applies upward pressure on the lower edge of tray 210 to move arm 201f upwards against the weight of the tray. A counterbalancing spring means (not shown) may be fitted to assist in this action. As arm 201f rotates about pivot 201h, tray 210 moves away from seatback 201b into the offset position 210os of Figure 4b, where tray 210 is held between latching parts 201j and 201k. Arm 201g may be shaped and/or angled to encourage this process. The tray movement process may be reversed as required, to return tray 210 to the stowed position 210st shown in Figure 4a. When tray 210 is in the offset position 210os shown in Figure 4b, it is spaced from the seatback and oriented substantially parallel thereto, so that the coat hanger portion 210c is suitably positioned to hang thicker, typically winter weight clothes adjacent to the seat back 201b. Latching parts 201j and 201k are shown in simple and abbreviated form for ease of illustration; in practice, more robust and extended profiles may be required to support the weight of coats hung over the hangers.

Latch arm 201g is shown at the top edge 214 of tray 210 in Figures 4a and 4b for ease of illustration. It may, however, be found more practical or convenient to fit one or two arms 201g at one or both sides (13, Fig. 2) of tray 210. Such an arrangement would allow a slide-out (extensible) coat hanger according to Figure 3 to be combined with the fore-and-aft (offset) movement of Figure 4, as arm 201g would not block upward extension of coat hanger 210c.

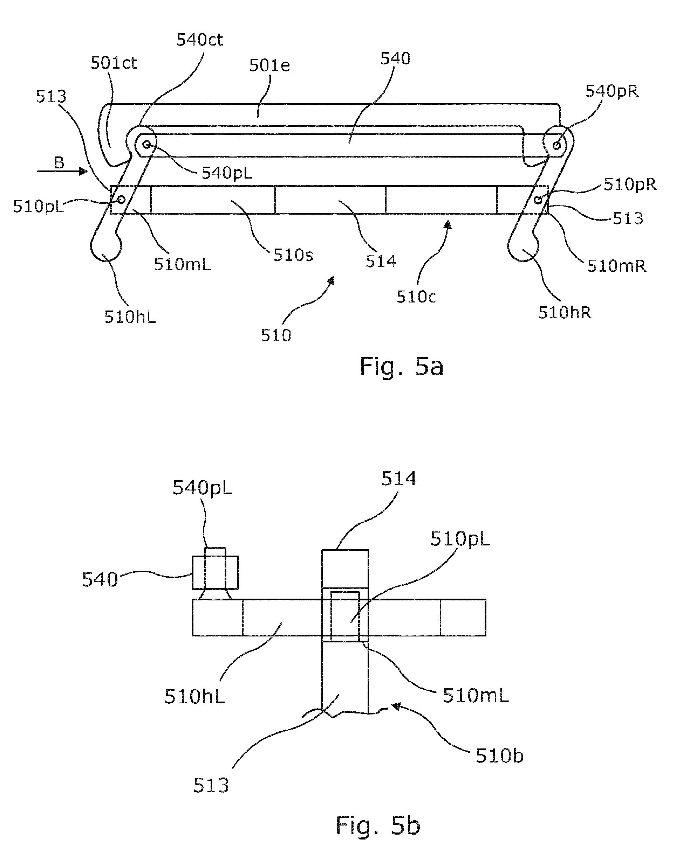

An example of side-mounted latch arms is shown in Figures 5a and 5b. In the plan view of Figure 5a, a coat hanger portion 510c comprises top edge 514 and two shoulder portions 510s. Pivots 510pL and 510pR are provided on pivot mounts 510mL and 510mR, which are provided on the seat tray table portion (510b, Fig. 5b). Although these pivots are shown on an end face of table portion 510b, they could also be mounted on projections from the upper parts of table edges 513. Such projections could be substantially vertically oriented, as shown; or horizontally oriented, so that handles 510h operate up and down, rather than side to side - with corresponding modifications to the seatback mounting. The pivots must in either case be close to the top of the seatback in order to provide effective latching; if they are too far down the table portion, the top of the table portion is liable to shake and rattle in the stowed position. It will be appreciated that coat hanger portion 510c may slide up and down (into and out of the Fig. 5a view) relative to table portion 510b, as shown in Figure 3. Handles 510hL and 510hR are linked together by pushrod 540, such that operation of either handle 510h will unlatch the seat tray. Latching is provided by fixed latch portions 501ct on seat back mounting point 501e (which is mounted in a similar position to mount 201e in Figure 4a), which engage with matching latch portions 540ct on handles 510hL and 510hR. Pushrod 540 is pivoted to handles 510hL and 510hR by pivot pins 540pL and 540pR. If a user presses handle 510hL or 510hR to the left (as shown), latches 540ct and 501ct will disengage, allowing the seat tray to be deployed for use. When the seat tray is deployed, pushrod 540 will act as a retainer, stopping objects on table portion 510b from slipping back into a user's lap. When it is desired to stow the seat tray, it can be pushed up into its substantially vertical position. The smooth curved forms of latches 540ct enable them to be pushed over latches 501ct until they engage together as shown. Spring means (not shown) bias handles 510hL and 510hR into the locked positions shown. Retainers (not shown) retain handles 510hL and 510hR, and pushrod 540, on their respective pivot pins. A second pair of latches 501ct could be provided at a greater distance from the seatbck than the latches shown, so as to allow the tray to be stowed in an offset position.

Other advantages will be apparent to one skilled in the art and the present examples and embodiments are to be considered illustrative and not restrictive. The invention is not to be limited to the details given herein, but may be modified within the scope and equivalence of the appended claims. For example, the coat hanger portion may extend from one of the side edges of the seat tray apparatus. Also, a coat hanger portion may be assembled to a free edge of a table portion.

## Claims

1. A seat tray apparatus (10) for mounting to a seatback (11) of a seat, the apparatus comprising a table portion (10b) arranged to be rotatable relative to the seatback (11);
wherein said table portion (10b) has at least one free edge (14);
and a free edge (14) of said table portion (10b) comprises a coat hanger portion (10c);
**characterized in that**:
the table portion (10b) is substantially rectangular and the coat hanger portion (10c) comprises a tapered portion (10t) extending from said table portion (10b).

2. A seat tray apparatus (10) according to claim 1, wherein the table portion (10b) is arranged to be hinged to the seatback (11) along a first edge (12) of said table portion (10b); and the coat hanger portion (10c) is arranged along a free edge (14) of said table portion (10b) which is opposed to said first edge (12).

3. A seat tray apparatus (10) according to claim 1 or claim 2, wherein the table portion (10b) comprises at least one hinge (10a) at a proximal end of said table portion to said seatback (11), and the coat hanger portion (10c) comprises a substantially linear neck portion (14) at a distal end of the table portion (10b) from said seatback (11), and two opposite handed tapered shoulder portions (10s) adjacent to said neck portion.

4. A seat tray apparatus (10) according to any preceding claim, wherein the coat hanger portion (10c) is integral with the free edge (14) of said table portion (10b).

5. A seat tray apparatus (10) according to any one of claims 1 to 3, wherein the coat hanger portion (10c) is assembled to the free edge (14) of said table portion (10b).

6. A seat tray apparatus (10) according to any preceding claim, wherein the coat hanger portion (10c) extends from the free edge (14) of said table portion (10b).

7. A seat tray apparatus (210) according to any preceding claim, wherein:
the table portion (21 0b) is arranged to move between a first, stowed position (210st) and a second, deployed position; and wherein:
in the stowed position, the coat hanger portion (210c) is spaced from said seatback (201b), and oriented substantially parallel thereto.

8. A seat tray apparatus (210) according to claim 7, wherein:
the table portion (210b) is arranged to rotate about a first pivot (21 0a) between the stowed (210st) and deployed positions, and further comprises means (201f, 201g, 201h) to permit movement of the table portion (210b) and coat hanger portion (210c) away from said seatback (201b) into an offset position (210os), so as to increase a spacing therebetween.

9. A seat tray apparatus (210) according to claim 7 or claim 8, further comprising latching means (201j) arranged to support at least a part of the coat hanger portion (210c) when the tray (210b) is in the stowed position (210st) or in the offset position (210os).

10. A seat tray apparatus (510) according to claim 9, wherein the latching means (501ct, 540ct) connect an upper part of at least one edge (513) of the coat hanger portion (510c) which is near to the top of the seatback in a stowed position or an offset position, with an adjacent part (501e) of the seatback.

11. A seat tray apparatus (110) according to any preceding claim, wherein the table portion comprises a first table portion (110b) arranged to be hinged to the seatback (111), and further comprises a second table portion (110b2) comprising a coat hanger portion (110c) arranged to move relative to the first table portion (110b) between a hanger-withdrawn position (110wd) and a hanger-extended position (110xt).

12. A seat tray apparatus (110) according to claim 11 wherein in the hanger-withdrawn position (110wd), the second table portion (110b2) is disposed at least partially within a recess or cavity (110bi) in the first table portion (110b).

13. A seat tray apparatus (110) as claimed in claims 11 to 12, comprising latching means (120b) between the first table portion (110b) and the second table portion (110b2) for selectively limiting relative movement therebetween.

14. A seat comprising a seat tray apparatus (10, 110, 210) according to any preceding claim.

15. A vehicle comprising a seat tray apparatus (10, 110, 210) or seat according to any preceding claim.
